# EUROPÄISCHE PATENTANMELDUNG

(11) **EP 2 538 607 A1**
(43) Veröffentlichungstag der Anmeldung: **26.12.2012**
(21) Anmeldenummer: 11171258.4
(22) Anmeldetag: 24.06.2011
(51) Int. Cl.: H04L 9/32, G01S 5/00

(54) **Verschlüsselte Übertragung von Ortsdaten**

(71) Anmelder: SIEMENS AKTIENGESELLSCHAFT, 80333 München (DE)
(72) Erfinder: Dombrowski, Sascha, 90475 Nürnberg (DE); Jöhnßen, Oliver, 91058 Erlangen (DE)

(57) **Zusammenfassung**

Die Erfindung betrifft ein Verfahren zur Übertragung von Ortsdaten eines Satellitennavigationssystems (106) von einem Empfänger (100) für Signale des Satellitennavigationssystems an ein Verarbeitungsgerät (102; 104), wobei das Verfahren die folgenden Schritte umfasst
- Empfang (S1) von Signalen des Satellitennavigationssystems durch den Empfänger (100);
- Bestimmung (S2) von Ortsdaten aus den empfangenen Signalen durch den Empfänger (100);
- Verschlüsselung (S3) der Ortsdaten durch den Empfänger (100); und
- Übertragung (S4) der verschlüsselten Ortsdaten an das Verarbeitungsgerät (102; 104) durch den Empfänger (100).

## Beschreibung

Die Erfindung betrifft ein Verfahren zur Übertragung von Ortsdaten eines Satelliten-Navigationssystems an ein Verarbeitungsgerät, insbesondere ein Verfahren zur verschlüsselten Übertragung der Ortsdaten. Aus dem Stand der Technik sind Empfänger für Ortsdaten eines Satelliten-Navigationssystems bekannt, die beispielsweise über eine USB-Schnittstelle an einen Computer anschließbar sind. Diese dienen dazu, Signale des Satelliten-Navigationssystems zu empfangen und über eine Schnittstelle an einen Computer auszugeben. Die Ortsdaten können dann auf dem Computer weiterbearbeitet werden.

Demgegenüber liegt der Erfindung die Aufgabe zugrunde, ein verbessertes Verfahren zur Übertragung von Ortsdaten eines Satelliten-Navigationssystems, einen verbesserten Empfänger für Signale eines Satelliten-Navigationssystems, ein verbessertes Computerprogrammprodukt und ein verbessertes System aus einem Empfänger und einem Verarbeitungsgerät zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen gegeben.

Nach Ausführungsformen der Erfindung werden zunächst Signale des Satelliten-Navigationssystems durch den Empfänger empfangen. Dies können beispielsweise Ortsdaten des NAVSTAR-GPS-Systems, des GLONASS-Systems oder des Systems Galileo sein. Der Empfänger empfängt hierbei Signale mehrerer Satelliten des Satelliten-Navigationssystems. Aus diesen Signalen kann, wie aus dem Stand der Technik bekannt, die Position des Empfängers relativ zu den Satelliten berechnet werden. Da für das Satelliten-Navigationssystem auch die Position der Satelliten oberhalb der Erdoberfläche und ihr Abstand von der Erdoberfläche bekannt ist, kann der Ort des Empfängers auf der Erdoberfläche berechnet werden.

Der Empfänger bestimmt die Ortsdaten aus den empfangenen Signalen. Die Ortsdaten bezeichnen die Position des Empfängers auf der Erdoberfläche oder mit anderen Worten den Ort des Empfängers. Die Ortsdaten werden durch den Empfänger verschlüsselt. Anschließend werden die verschlüsselten Ortsdaten an das Verarbeitungsgerät durch den Empfänger übertragen.

Die Verschlüsselung der Ortsdaten und die Übertragung der verschlüsselten Ortsdaten an das Verarbeitungsgerät sind vorteilhaft, da die Ortsdaten somit zwischen dem Empfänger und dem Verarbeitungsgerät nicht verfälscht werden können. Das Verarbeitungsgerät kann sich also sicher sein, dass die empfangenen Ortsdaten die wirklich durch den Empfänger ermittelten Ortsdaten sind und nicht durch einen Dritten veränderte Ortsdaten.

Nach Ausführungsformen der Erfindung werden eine erste Verbindung zwischen einem Nutzergerät und dem Empfänger und eine zweite Verbindung zwischen dem Nutzergerät und dem Verarbeitungsgerät aufgebaut. Die Übertragung der Ortsdaten erfolgt dabei über die erste und die zweite Verbindung. Mit anderen Worten werden die Ortsdaten von dem Empfänger über das Nutzergerät zum Verarbeitungsgerät übertragen. Die Ortsdaten spezifizieren dabei einen Ort des Nutzergerätes und des Empfängers. Das Nutzergerät kann beispielsweise ein Computer, ein programmierbares Gerät, ein Laptop, ein Palm, ein Handheld, ein Handy, ein Organizer, ein Panel, ein HMI-Panel oder ein ähnliches Gerät zur Ausführung von Computerprogrammen sein. Das Verarbeitungsgerät kann beispielsweise ein Server sein, der über ein Netzwerk mit dem Nutzergerät verbunden ist. Das Netzwerk kann beispielsweise das Internet sein. Beispielsweise kann das Nutzergerät mit dem Verarbeitungsgerät durch den Aufruf einer Internetseite durch das Nutzergerät verbunden werden.

Ein Nutzer kann beispielsweise sich die Internetseite des Verarbeitungsgeräts auf dem Nutzergerät anzeigen lassen und Eingaben an dem Nutzergerät durchführen, die eine Anfrage nach einer Übertragung von Daten über die zweite Verbindung durch das Nutzergerät auslösen. Es wird also eine Anfrage nach einer Übertragung von Daten über die zweite Verbindung von dem Nutzergerät an das Verarbeitungsgerät gesendet. Das Verarbeitungsgerät entschlüsselt dann die verschlüsselten Ortsdaten und überprüft, ob die Daten, die angefragt wurden, an den Ort des Nutzergerätes übertragen werden dürfen. Der Ort des Nutzergerätes ist dem Verarbeitungsgerät dadurch bekannt, dass die Ortsdaten verschlüsselt von dem Empfänger über das Nutzergerät an das Verarbeitungsgerät übertragen wurden. Da das Nutzergerät beispielsweise über eine Schnittstelle verfügt, an der der Empfänger angeschlossen ist, bestimmen die Ortsdaten sowohl den Ort des Empfängers als auch den Ort des Nutzergeräts. In der Praxis ist davon auszugehen, dass der Empfänger sich wahrscheinlich im gleichen Raum oder zumindest im gleichen Gebäude wie das Nutzergerät befindet. Beispielsweise kann der Empfänger mit dem Nutzergerät über eine USB-Schnittstelle verbunden sein. In diesem Fall beträgt normalerweise die Kabellänge zwischen dem Empfänger und dem Nutzergerät höchstens 10 m. Es ist zu beachten, dass auch längere Kabellängen möglich sind und dass der Empfänger sich auch weiter entfernt von dem Nutzergerät befinden kann. Es wird allerdings davon ausgegangen, dass sich der Empfänger nahe genug an dem Nutzergerät befindet, sodass der Abstand zwischen Empfänger und Nutzergerät bei der Überprüfung, ob die Daten an den Ort des Nutzergerätes übertragen werden dürfen, nicht ins Gewicht fällt.

Die Überprüfung, ob die Daten an den Ort des Nutzergerätes übertragen werden dürfen, beinhaltet zum Beispiel, dass eine Übertragung der Daten beispielsweise exportsächliche Vorschriften entgegenstehen könnten, sodass eine Übertragung der Daten an den Ort des Nutzergerätes von dem Ort des Verarbeitungsgerätes aus nicht erlaubt ist. Die Daten können beispielsweise Daten eines Computerprogramms oder Daten einer Lizenz für ein Computerprogramm sein. Hierbei ist zum Beispiel denkbar, dass der Hersteller des Computerprogrammes bestimmte Länder von der Verwendung des Programmes ausschließen möchte oder sogar gesetzlich dazu verpflichtet ist, die Verwendung des Programmes in solchen Ländern auszuschließen. Wenn nun also das Nutzergerät die Anfrage nach der Übertragung der Daten stellt, bestimmt das Verarbeitungsgerät ob die Daten an den Ort des Nutzergerätes übertragen werden sollen. Wenn eine Übertragung der Daten Vorschriften entgegenstehen oder eine Übertragung aus einem anderen Grund an den Ort des Nutzergeräts nicht erfolgen soll, werden die Daten nicht an das Nutzergerät übertragen. Falls die Daten ein Computerprogramm sind, erfolgt also keine Übertragung des Computerprogramms an das Nutzergerät. Falls die Daten eine Lizenz für ein Computerprogramm sind, erfolgt keine Übertragung der Lizenz an das Nutzergerät, sodass das Computerprogramm nicht ausgeführt werden kann.

Wenn die Überprüfung ergeben hat, dass die Daten übertragen werden dürfen, werden die Daten an das Nutzergerät durch das Verarbeitungsgerät übertragen. Falls die Daten ein Computerprogramm sind, wird also das Computerprogramm an das Nutzergerät übertragen. Falls die Daten eine Softwarelizenz eines Computerprogramms sind, wird die Softwarelizenz an das Nutzergerät übertragen. Mit der Softwarelizenz kann dann das Nutzergerät das Computerprogramm ausführen. Das Computerprogramm muss in diesem Falle noch an das Nutzergerät übertragen werden, falls es nicht schon auf dem Nutzergerät installiert ist. Eine Übertragung des Computerprogramms kann in diesem Falle nach Ausführungsformen der Erfindung oder aber auch in einer anderen Weise erfolgen. Beispielsweise kann das Computerprogramm an dem Nutzergerät von einem Datenträger wie einer CD oder einer DVD oder einer Speicherkarte installiert werden. Es ist auch möglich, dass das Computerprogramm durch ein anderes Verfahren von dem Verarbeitungsgerät oder von einem anderen Gerät heruntergeladen wird.

Dadurch, dass eine Übertragung der Ortsdaten von dem Empfänger über das Nutzergerät an das Verarbeitungsgerät verschlüsselt erfolgt, können die Ortsdaten nicht durch das Nutzergerät manipuliert werden. Eine Manipulation der Ortsdaten ist nicht möglich, da das Nutzergerät die Ortsdaten nicht lesen kann und auch nicht verändern kann. Die Ortsdaten können beispielsweise mit einem Schlüsselpaar verschlüsselt werden. Beispielsweise verschlüsselt der Empfänger die Ortsdaten mit einem öffentlichen Schlüssel des Verarbeitungsgeräts. Das Verarbeitungsgerät kann die Ortsdaten dann unter Verwendung eines privaten Schlüssels des Verarbeitungsgerätes entschlüsseln. Das Nutzergerät verfügt nicht über den privaten Schlüssel des Verarbeitungsgerätes, sodass dem Nutzergerät eine Entschlüsselung und/oder Manipulation der Ortsdaten nicht möglich ist.

Nach Ausführungsformen der Erfindung umfasst das Verfahren die Übertragung einer Adresse des Nutzergerätes über die erste Verbindung an den Empfänger. Diese Übertragung kann beispielsweise automatisch erfolgen oder auf Anfrage des Empfängers erfolgen. Die Adresse des Nutzergerätes kann beispielsweise die sogenannte Medium Access Control (MAC) Adresse des Nutzergerätes sein. Die Adresse wird durch den Empfänger verschlüsselt und über die erste und die zweite Verbindung an das Verarbeitungsgerät übertragen. Das Verarbeitungsgerät verwendet die Adresse, um Daten an das Nutzergerät zu übertragen. Die Adresse wird also ähnlich wie die Ortsdaten verschlüsselt und übertragen, sodass auch die Adresse nicht durch das Nutzergerät verfälscht oder ausgelesen werden kann. Die Daten werden dann direkt an diese Adresse übertragen. Im Falle einer MAC-Adresse kann dies beispielsweise ein an die MAC-Adresse gerichteter Download, zum Beispiel via https:// oder FTP-Transfer (Fil Transfer Protocol) sein. Somit wird verhindert, dass die Daten an ein anderes Gerät als das durch die Adresse definierte Nutzergerät übertragen werden.

Nach Ausführungsformen der Erfindung wird ein Identifikator des Empfängers vom Empfänger an das Verarbeitungsgerät übertragen. Unter Verwendung des Identifikators wird ein öffentlicher Schlüssel des Empfängers durch das Verarbeitungsgerät ermittelt. Dies kann beispielsweise dadurch geschehen, dass dem Verarbeitungsgerät Datenbanken und/oder Listen zugänglich sind, in denen Informationen darüber gespeichert sind, welcher öffentlicher Schlüssel zu welchem Identifikator passt. Wenn also dem Verarbeitungsgerät der Identifikator des Empfängers bekannt ist, ist dem Verarbeitungsgerät auch der öffentliche Schlüssel bekannt.

Eine Session-ID wird durch das Verarbeitungsgerät erzeugt und mit dem öffentlichen Schlüssel des Empfängers verschlüsselt. Die verschlüsselte Session-ID wird von dem Verarbeitungsgerät an den Empfänger übertragen. Dadurch, dass die Session-ID mit dem öffentlichen Schlüssel des Empfängers verschlüsselt ist, kann die Session-ID nicht durch das Nutzergerät entschlüsselt und/oder manipuliert werden. Der Empfänger entschlüsselt durch Verwendung des privaten Schlüssels des Empfängers die Session-ID und überträgt die Session-ID an das Verarbeitungsgerät zusammen mit den Ortsdaten und der Adresse des Nutzergerätes. Anschließend überprüft das Verarbeitungsgerät, ob die vom Empfänger empfangene Session-ID mit der zuvor an den Empfänger übertragenen Session-ID übereinstimmt. Die Daten werden nur dann an das Nutzergerät übertragen, wenn die vom Empfänger empfangene Session-ID mit der zuvor an den Empfänger übertragenen Session-ID übereinstimmt.

Die Verwendung des Identifikators und der Session-ID sind vorteilhaft, da so vermieden wird, dass die Anfrage nach der Übertragung der Daten durch ein anderes Nutzergerät gestellt wird als das Nutzergerät, das mit dem Empfänger verbunden ist. Falls die Session-IDs nicht übereinstimmen, werden keine Daten an das Nutzergerät übertragen. In diesem Fall könnte versucht worden sein, die Daten an ein Nutzergerät zu übertragen, das nicht mit dem Empfänger verbunden ist, dessen Ortsdaten empfangen wurden.

Die Session-ID kann beispielsweise eine Folge von Buchstaben und/oder Zahlen und/oder Sonderzeichen sein.

Nach Ausführungsformen der Erfindung verfügt der Empfänger über eine externe Stromversorgung. Die externe Stromversorgung kann beispielsweise durch ein Netzteil oder über eine Batterie oder einen Akku realisiert werden. Alternativ kann der Empfänger auch über die Schnittstelle, die für die erste Verbindung verwendet wird, mit Strom versorgt werden. Dies ist beispielsweise bei einer USB-Schnittstelle möglich.

Nach Ausführungsformen der Erfindung wird ein öffentlicher Schlüssel des Verarbeitungsgeräts mit dem öffentlichen Schlüssel des Empfängers verschlüsselt. Der verschlüsselte öffentliche Schlüssel des Verarbeitungsgeräts wird an den Empfänger übertragen. Die Verschlüsselung des öffentlichen Schlüssels des Empfängers und die Übermittlung an den Empfänger geschehen vorzugsweise durch das Verarbeitungsgerät. Beispielsweise ist der öffentliche Schlüssel durch das Verarbeitungsgerät mittels des Identifikators des Empfängers ermittelbar. Der Empfänger verfügt über den privaten Schlüssel des Empfängers und kann unter Verwendung dieses privaten Schlüssels den öffentlichen Schlüssel des Verarbeitungsgeräts entschlüsseln. Der öffentliche Schlüssel des Verarbeitungsgeräts wird zur Verschlüsselung der Session-ID, der Ortsdaten und/oder der Adresse des Nutzergerätes verwendet.

Dem Empfänger wird also verschlüsselt der öffentliche Schlüssel des Verarbeitungsgeräts übertragen. Der öffentliche Schlüssel des Verarbeitungsgeräts kann somit nicht von dem Nutzergerät ausgelesen oder verändert werden. Die verschlüsselte Übertragung des öffentlichen Schlüssels des Verarbeitungsgeräts vom Verarbeitungsgerät zum Empfänger erhöht noch einmal mehr die Sicherheit des Verfahrens.

Nach Ausführungsformen der Erfindung weist die Session-ID eine Gültigkeitsdauer auf. Nach Ablauf der Gültigkeitsdauer wird die Session-ID ungültig. Die Gültigkeit der Session-ID wird durch das Verarbeitungsgerät geprüft, wenn die Session-ID von dem Empfänger empfangen wird. Die Daten werden nur dann an das Nutzergerät übertragen, wenn die Session-ID gültig ist. So kann verhindert werden, dass ein vom Empfänger verschicktes Signal abgefangen und entschlüsselt werden kann, um beispielsweise eine Verfälschung der Ortsdaten vornehmen zu können.

Zusätzlich oder alternativ zur Gültigkeitsdauer der Session-ID kann auch ein Zeitintervall durch das Verarbeitungsgerät definiert werden, nach dessen Ablauf die Ortsdaten durch das Verarbeitungsgerät von dem Empfänger empfangen worden sein müssen. Hierdurch wird ebenfalls verhindert, dass die Ortsdaten mit zeitaufwendigen Verfahren unberechtigter Weise entschlüsselt und verändert werden können.

Nach Ausführungsformen der Erfindung vergleicht das Verarbeitungsgerät eine Antwortzeit des Empfängers auf eine Anfrage mit einem Maximalwert. Die Anfrage kann in diesem Fall beispielsweise ein sogenanntes Ping-Signal sein. Die Daten werden nur dann an das Nutzergerät übertragen, wenn die Antwortzeit unterhalb des Maximalwerts liegt oder wenn die Antwortzeit gleich dem Maximalwert ist. Der Maximalwert kann beispielsweise eine halbe Sekunde oder auch einige Sekunden sein. Maximalwerte können auch im Milli- oder Mikrosekundenbereich liegen.

Durch diese maximale Antwortzeit kann verhindert werden, dass eine Schnittstelle geteilt wird, an der der Empfänger betrieben wird. Dies könnte beispielsweise über das Internet oder ein Intranet möglich sein. Dies könnte dazu führen, dass die Ortsdaten von dem Empfänger, der an einem Ort betrieben wird, der von dem Verarbeitungsgerät als zulässig erkannt werden würde, durch ein Nutzergerät in einen Land verwendet wird, das von dem Verarbeitungsgerät als ein unzulässiges Land erkannt werden würde. Mit anderen Worten befinden sich in diesem Falle der Empfänger und das Nutzergerät an unterschiedlichen Orten, da der Empfänger nicht direkt mit dem Nutzergerät, sondern mit einem anderen Nutzergerät verbunden ist. Wenn die Antwortzeit mit dem Maximalwert verglichen wird, kann ein solcher Missbrauch unterbunden werden, weil der Maximalwert durch den vergrößerten Signalisierungsaufwand überschritten werden würde.

Nach Ausführungsformen der Erfindung werden die Daten und Signale, die zwischen dem Empfänger und dem Verarbeitungsgerät ausgetauscht werden, durch eine sogenannte zyklische Redundanzprüfung überprüft. Dadurch können eventuelle Datenverfälschungen auf der jeweiligen Empfängerseite, also beim Empfänger oder beim Verarbeitungsgerät, erkannt werden.

Nach Ausführungsformen der Erfindung sind die Daten Daten eines ausführbaren Computerprogramms. Die Daten können beispielsweise auch gepackt sein. Außerdem kann es sich lediglich um Installationsdateien für das Computerprogramm handeln. Es ist auch möglich, dass die Daten nur die Lizenz für das ausführbare Programm umfassen. Das Computerprogramm wird in diesem Falle getrennt von der Lizenz an den Empfänger ausgeliefert. Diese Auslieferung kann beispielsweise über das Internet, nach Ausführungsformen der Erfindung, über ein Speichermedium oder über ein Netzwerk erfolgen.

Nach Ausführungsformen der Erfindung wird durch das Verarbeitungsgerät eine Anfrage zur Ausführung eines Computerprogramms empfangen. Die Ortsdaten werden dann von dem Empfänger an das Verarbeitungsgerät verschlüsselt übertragen. Das Verarbeitungsgerät entschlüsselt die Ortsdaten. Beispielsweise kann es sich bei dem Verarbeitungsgerät hier um einen Computer, ein programmierbares Gerät, einen Laptop, einen Palm, einen Handheld, ein Handy, einen Organizer, ein Panel, ein HMI-Panel oder ein anderes Gerät zur Ausführung von Computerprogrammen handeln. Das Verarbeitungsgerät prüft, ob das Computerprogramm an einem durch die Ortsdaten spezifizierten Ort ausgeführt werden darf. Das Computerprogramm wird nur dann ausgeführt, wenn es an dem Ort ausgeführt werden darf. Somit wird verhindert, dass das Computerprogramm zunächst an einem Ort installiert wird, an dem eine Installation des Computerprogramms erlaubt ist und anschließend das Verarbeitungsgerät an einen Ort transportiert wird, wo ein Betrieb des Verarbeitungsgerätes mit dem Computerprogramm nicht erlaubt ist.

Beispielsweise kann das Verarbeitungsgerät bei jedem Start des Computerprogrammes überprüfen, ob das Programm an dem Ort, wo sich das Verarbeitungsgerät zu dem Startzeitpunkt befindet, ausgeführt werden darf.

Nach Ausführungsformen der Erfindung wird ein Identifikator des Empfängers durch das Verarbeitungsgerät ausgelöst und ein öffentlicher Schlüssel des Empfängers unter Verwendung des Identifikators ermittelt. Eine Session-ID wird durch das Verarbeitungsgerät erzeugt und mit dem öffentlichen Schlüssel des Empfängers verschlüsselt. Außerdem wird ein öffentlicher Schlüssel des Verarbeitungsgerätes ebenfalls mit dem öffentlichen Schlüssel des Empfängers verschlüsselt. Die verschlüsselte Session-ID und der verschlüsselte öffentliche Schlüssel des Verarbeitungsgerätes werden an den Empfänger übertragen und durch den Empfänger entschlüsselt. Hierfür verwendet der Empfänger einen privaten Schlüssel des Empfängers. Der öffentliche Schlüssel des Verarbeitungsgerätes wird zur Verschlüsselung der Ortsdaten verwendet. Die Session-ID wird ebenfalls mit dem öffentlichen Schlüssel des Verarbeitungsgerätes verschlüsselt und von dem Empfänger an das Verarbeitungsgerät übertragen. Durch das Verarbeitungsgerät wird die verschlüsselte Session-ID entschlüsselt und es wird überprüft, ob die von dem Empfänger an das Verarbeitungsgerät übertragene Session-ID mit der vom Verarbeitungsgerät an den Empfänger übertragenen Session-ID übereinstimmt. Das Computerprogramm wird nur dann ausgeführt, wenn die von dem Empfänger an das Verarbeitungsgerät übertragene Session-ID mit der vom Verarbeitungsgerät an den Empfänger übertragenen Session-ID übereinstimmt.

Die Verwendung der Session-ID hat den Vorteil, dass das Antwortsignal des Empfängers auf die Anfrage nach den Ortsdaten in einem Land aufgezeichnet wird, in dem die Ausführung der Software zulässig ist und in einem Land an das Verarbeitungsgerät ausgegeben wird, an dem eine Ausführung der Software unzulässig wäre. Dem Verarbeitungsgerät würde in diesem Falle fälschlicherweise signalisiert, dass sich der Empfänger an einem zulässigen Ort befindet.

Nach Ausführungsformen der Erfindung verfügt das durch das Verarbeitungsgerät ausführbare Computerprogramm über ein Sicherheitsmodul, das bei Ausführung des Computerprogrammes die Ortsdaten von dem Empfänger anfragt und empfängt. Das Sicherheitsmodul des ausführbaren Computerprogrammes kann also die Schritte des Verfahrens nach Ausführungsformen der Erfindung ausführen. Das Sicherheitsmodul des ausführbaren Computerprogrammes gewährleistet somit, dass das Computerprogramm nur an zulässigen Orten in zulässigen Ländern ausgeführt werden kann.

Nach Ausführungsformen der Erfindung werden zusätzliche Überprüfungen, ob das Computerprogramm an dem Ort ausgeführt werden darf, in regelmäßigen Abständen während der Ausführung des Computerprogrammes durchgeführt. Beispielsweise kann alle zehn Minuten überprüft werden, ob der Ort des Empfängers immer noch ein zulässiger Ort ist. Somit wird verhindert, dass das Verarbeitungsgerät während der Ausführung des Computerprogrammes an einem unzulässigen Ort transportiert wird. Eine Überprüfung kann auch in unregelmäßigen Abständen erfolgen. Beispielsweise verfügt das Computerprogramm über eine oder mehrere Funktionen, die an bestimmten Orten nicht ausgeführt werden dürfen. Andere Funktionen hingegen dürfen an allen Orten der Welt ausgeführt werden. In diesem Falle überprüft das Verarbeitungsgerät, vorzugsweise das Sicherheitsmodul des ausführbaren Computerprogramms, die Zulässigkeit des Ortes, wenn eine Funktion ausgeführt wird, die nicht an allen Orten der Welt ausgeführt werden darf.

Nach Ausführungsformen der Erfindung erfolgt die Überprüfung, ob das Computerprogramm an dem Ort ausgeführt werden darf, unter Verwendung einer Datenbank. Die Datenbank kann beispielsweise in dem Verarbeitungsgerät gespeichert sein. Die Datenbank kann durch ein Update des ausführbaren Computerprogramms oder durch ein Update des Sicherheitsmoduls des ausführbaren Computerprogramms aktualisiert werden. Dies hat den Vorteil, dass die Datenbank an aktuelle Gegebenheiten angepasst werden kann. Wenn beispielsweise weitere Länder als unzulässig definiert werden sollen, können diese in der Datenbank als unzulässig definiert werden. In der Datenbank können beispielsweise nur die Länder aufgeführt sein, an denen das Computerprogramm nicht ausgeführt werden darf. In diesem Falle wird eine Ausführung des Computerprogrammes verhindert, wenn ein Ort in einem dieser Länder liegt. Alternativ kann die Software auch nur die Länder umfassen, in denen das Computerprogramm ausgeführt werden darf. In solch einem Fall wird die Software nur dann ausgeführt, wenn der Ort in einem Land liegt, das in der Datenbank vorhanden ist. Alternativ dazu kann die Datenbank auch alle Länder der Welt umfassen. In diesem Fall wird für jedes Land explizit definiert, ob das Computerprogramm in diesem Land ausgeführt werden darf. Gegebenenfalls kann in der Datenbank auch definiert sein, dass das Computerprogramm nur mit bestimmten Funktionen an bestimmten Orten ausgeführt werden darf. Beispielsweise kann der Funktionsumfang des Computerprogrammes in bestimmten Ländern begrenzt werden.

In einem weiteren Aspekt betrifft die Erfindung einen Empfänger für Signale eines Satelliten-Navigationssystems. Der Empfänger verfügt über Mittel zum Empfang von Signalen des Satelliten-Navigationssystems, Mittel zur Bestimmung von Ortsdaten aus den empfangenen Signalen, Mittel zur Verschlüsselung der Ortsdaten und Mittel zur Übertragung der verschlüsselten Ortsdaten an ein Verarbeitungsgerät durch den Empfänger.

In noch einem weiteren Aspekt betrifft die Erfindung ein Computerprogrammprodukt mit durch einen Prozessor ausführbaren Instruktionen. Die Instruktionen sind bei Ausführung durch einen Empfänger und ein Verarbeitungsgerät dazu ausgebildet, den Empfänger und das Verarbeitungsgerät zur Durchführung eines Verfahrens nach Ausführungsformen der Erfindung zu veranlassen. Das Computerprogrammprodukt kann beispielsweise aus zwei Teilen bestehen, wobei ein Teil durch den Empfänger und ein Teil durch das Verarbeitungsgerät ausgeführt wird.

In noch einem weiteren Aspekt betrifft die Erfindung ein System aus einem Empfänger und einem Verarbeitungsgerät. Der Empfänger und das Verarbeitungsgerät sind zur Durchführung eines Verfahrens nach Ausführungsformen der Erfindung ausgebildet.

Nachfolgend werden Ausführungsformen der Erfindung anhand der Figuren näher erläutert. Es zeigen:
- Figur 1: eine schematische Ansicht eines Systems aus einem Verarbeitungsgerät, einem Nutzergerät und einem Empfänger;
- Figur 2: ein Flussdiagramm eines Verfahrens nach Ausfüh-rungsformen der Erfindung.

Elemente der nachfolgenden Figuren werden mit denselben Bezugszeichen gekennzeichnet, wenn die Funktion des Elementes identisch ist.

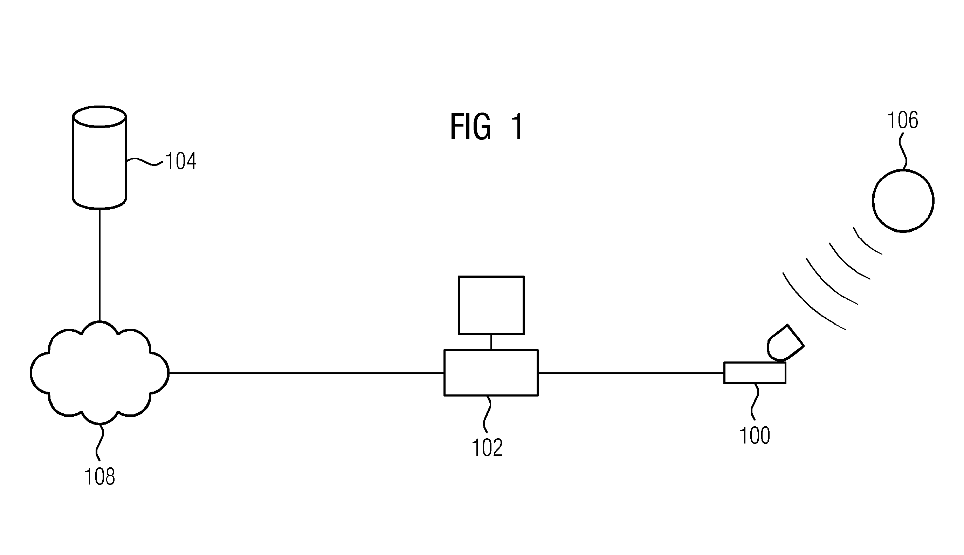

Figur 1 ist eine schematische Ansicht eines Systems aus einem Empfänger 100, einem Computer 102 und einem Server 104. Der Computer 102 ist über das Internet oder ein Intranet mit dem Server 104 verbunden. Beispielsweise wird über den Computer 102 eine Webseite des Servers 104 aufgerufen. Der Empfänger 100 kann auch als SAT-Dongle bezeichnet werden. Das SAT-Dongle empfängt Signale eines Satelliten-Navigationssystems 106 und ermittelt aus diesen Signalen Ortsdaten, die auf Anfrage an den Computer 102 übertragen werden. Das SAT-Dongle 100 ist beispielsweise über eine USB-Schnittstelle mit dem Computer 102 verbunden. Der Computer 102 kann auch als Nutzer-Endgerät bezeichnet werden.

Das SAT-Dongle besitzt einen eigenen eindeutigen und auslesbaren Identifikator, der auch als ID bezeichnet werden kann. Das SAT-Dongle kann Signale von Satelliten empfangen, um damit die entsprechenden Koordinaten der aktuellen geografischen Position des SAT-Dongles zu bestimmen. Das SAT-Dongle kann die gültige MAC-Adresse des Nutzer-Endgeräts (PC/PG/Laptop o. ä.) ermitteln, an dem es gesteckt und /oder installiert ist. Das SAT-Dongle lässt sich über eine Standard-Schnittstelle mit einem PC/PG/Laptop u. ä. kabelgebunden oder kabellos datentechnisch verbinden, z. B. über Standard-Schnittstellen wie USB, Bluetooth, WiFi oder andere. Zur Stromversorgung soll das SAT-Dongle entweder direkt über die Datenschnittstelle, z. B. die USB-Datenschnittstelle oder über ein zusätzliches zweites USB-Kabel, oder über eine externe Stromversorgung bzw. über eine Batterie bzw. einen Akku für eine kabellose Lösung versorgt werden. Das SAT-Dongle besitzt kommunikativ die Fähigkeit, einzelne Telegramme über die Datenschnittstelle zu empfangen und zu senden. Das SAT-Dongle besitzt rudimentäre Datenverarbeitungsfähigkeiten, mit denen (1) empfangene Telegramme/Datensätze entschlüsselt werden können, (2) zusammenhängende Dateninhalte aus den Telegrammen/Datensätzen extrahiert werden können und (3) eigene Telegramme erstellt/zusammengesetzt und (4) verschlüsselt werden können. Für die Ver- und Entschlüsselung von Telegrammen/Datensätzen sollen geeignete dem jeweiligen technischen Stand entsprechende und zugelassene symmetrische oder asymmetrische Standard-Datenverschlüsselungs-Verfahren, z. B. RSA-Kryptographie, Public-Key"-Verfahren, vom SAT-Dongle verwendet werden.

Ein Nutzer möchte grundsätzlich von irgendwo auf der Welt exportkontrollrechtlich beschränkte Software eines Herstellers über das Internet herunterladen. Dazu beschafft sich der Nutzer einen geeigneten SAT-Dongle von dem Hersteller/Distributor der Software. Der Nutzer verbindet zum Download einer solchen Software den SAT-Dongle mit einer geeigneten Kommunikations-Schnittstelle an seinem Endgerät, dem PC/PG/Laptop o. ä., auf dem die Software via Download über das Internet bezogen/übertragen werden soll, und installiert ggf. noch für den Betrieb des SAT-Dongles notwendige Treiber. Der Nutzer navigiert in seinem Browser wie üblich zur WWW-Adresse (world wide web, z. B. der Homepage) des Herstellers/Distributors im Internet und navigiert dort wie gewöhnlich zu dessen Download-Bereich.

Der Nutzer stößt den Download-Vorgang der herunterzuladenden Software auf der Internetseite des Anbieters an, woraufhin Distributor-seitig ein Download-Manager (1) aktiviert wird, der sich um die für einen sicheren Download der Software notwendige Kommunikation mit dem SAT-Dongle kümmert. Der Download-Manager (2) liest mittels eines Initialisierungs-Telegramms die eindeutige SAT-Dongle-ID automatisch über z. B. die bestehende sichere Internet-Verbindung (https://...) zwischen Nutzer-Endgerät und Internetseite des Anbieters aus oder baut alternativ parallel zur bestehenden Internet-Verbindung eine weitere sichere Kommunikations-Verbindung zum SAT-Dongle auf. Nach dem erfolgreichen Auslesen der SAT-Dongle-ID (3) ermittelt der Download-Manager (durch ihm Distributor-seitig zugängliche Listen und/oder Datenbanken den öffentlichen Schlüssel (public key) des spezifischen SAT-Dongles. Danach erzeugt der Download-Manager Distributor-seitig (4) dynamisch einen Identifier, die sogenannte Session-ID. Diese Session-ID sollte eine mehrziffrige Zufallszahl sein. Anschließend (5) verpackt der Download-Manager diese Session-ID gemeinsam mit seinem eigenen öffentlichen Schlüssel (dem "public key" des Download-Managers selbst) in ein Anfrage-Telegramm. Danach (6) verschlüsselt der Download-Manager dieses Anfrage-Telegramm mit dem öffentlichen Schlüssel (public key) des SAT-Dongles SAT-Dongle-spezifisch, z.B. mittels üblichen Krypto-Verfahren, und (7) schickt dieses Anfrage-Telegramm an das nutzerseitig gesteckte SAT-Dongle.

Die Verschlüsselung des Anfrage-Telegramms kann deswegen SAT-Dongle-spezifisch erfolgen, weil der Download-Manager zuvor die eindeutige SAT-Dongle-ID aus dem SAT-Dongle gelesen hat und damit über ihm zugängliche Listen den öffentlichen Schlüssel (public key) des SAT-Dongles nachschlagen kann. Die Verschlüsselung soll deswegen SAT-Dongle-spezifisch erfolgen, damit nur dieser eine SAT-Dongle das Anfrage-Telegramm entschlüsseln kann.

Zur Verschlüsselung des Anfrage-Telegramms kann beispielsweise das RSA-Verfahren hergenommen werden, bei dem das Anfrage-Telegramm vom Download-Manager mit dem öffentlichen Schlüssel (public key) des spezifischen SAT-Dongles verschlüsselt werden könnte. Der SAT-Dongle kann dann das empfangene Anfrage-Telegramm mit seinem privaten Schlüssel (private key) als einziger wieder entschlüsseln. Das nutzerseitig gesteckte SAT-Dongle (1) empfängt das verschlüsselte Anfrage-Telegramm, (2) entschlüsselt dieses mit z. B. seinem nur ihm bekannten privaten Schlüssel (private key) und (3) zerlegt dieses in seine Datenbestandteile. Das SAT-Dongle (4) ermittelt im nächsten Schritt die geografischen Koordinaten seines aktuellen Standortes über den Empfang von entsprechenden Satelliten-Signalen. Sowie die geografischen Standorts-Koordinaten vollständig vorliegen, (5) ermittelt das SAT-Dongle die gültige MAC-Adresse des Nutzer-Endgeräts, z.B. ein PG/PC/Laptop o.ä., und (6) erzeugt nutzerseitig ein Antwort-Telegramm, bestehend aus (A) der vom Download-Manager im Anfrage-Telegramm erhaltenen Session-ID sowie (B) den aktuellen geografischen Standort-Koordinaten, die immer den aktuellen Standort des SAT-Dongles repräsentieren, und (C) der ermittelten aktiven MAC-Adresse des Nutzer-Endgeräts. Der SAT-Dongle (7) verschlüsselt danach das Antwort-Telegramm mit gängigen Krypto-Verfahren mit dem öffentlichen Schlüssel (public key) des Download-Managers Download-Manager-spezifisch und (8) schickt das Antwort-Telegramm an den Distributor-seitigen Download-Manager. Der Distributor-seitige Download-Manager (1) entschlüsselt daraufhin das Antwort-Telegramm des SAT-Dongles mit seinem ihm bekannten privaten Schlüssel (private key) und (2) zerlegt dieses in seine Dateninhalte. Der Download-Manager (3) prüft als erstes die von ihm im Anfrage-Telegramm verschickte Session-ID mit der vom SAT-Dongle zurückgeschickten auf Gleichheit. Nur wenn beide Session-IDs identisch sind, (4) wertet der Download-Manager die geografischen Koordinaten aus und (5) prüft über dem Download-Manager zugängliche Listen und/oder Datenbanken, ob es sich um einen zulässigen geografischen Standort handelt, an dem sich der SAT-Dongle befindet. Der Download-Manager lässt (6) den Download der Software nur dann zu, wenn die Prüfung der geografischen Koordinaten einen zulässigen Ort ergeben hat, andernfalls würde der Download-Manager den Download der Software über das Internet verhindern. Der Download-Manager (7) sorgt dafür, dass der Download der Software ausschließlich an die empfangene MAC-Adresse übermittelt wird. Dies kann der Download-Manager z. B. dadurch bewerkstelligen, dass er die bereits aufgebaute sichere Verbindung zwischen ihm und dem Nutzer-Endgerät zum Übertragen der Software verwendet.

Die Verschlüsselung des Antwort-Telegramms kann deswegen durch den SAT-Dongle Download-Managerspezifisch erfolgen, weil dem SAT-Dongle der öffentlichen Schlüssel (public key) des Download-Managers im Anfrage-Telegramm übermittelt wurde. Die Verschlüsselung soll deswegen Download-Manager-spezifisch erfolgen, damit nur dieser eine Download-Manager das Antwort-Telegramm entschlüsseln kann.

Zur Verschlüsselung des Antwort-Telegramms kann beispielsweise ebenfalls das RSA-Verfahren hergenommen werden, bei dem das Antwort-Telegramm vom SAT-Dongle mit dem öffentlichen Schlüssel des Download-Managers verschlüsselt werden könnte. Der Download-Manager kann dann das empfangene Antwort-Telegramm mit seinem privaten Schlüssel (private key) als einziger wieder entschlüsseln.

Durch die Prüfung des Download-Managers der von ihm im Anfrage-Telegramm verschickten Session-ID mit der vom SAT-Dongle zurückgeschickten Session-ID auf Übereinstimmung kann verhindert werden, dass jemand ein Antwort-Telegramm in einem zulässigen Land aufzeichnet, dieses gegen das vom SAT-Dongle vor Ort erzeugte Antwort-Telegramm austauscht und dieses dann anstelle des echten Antwort-Telegramms zurück an den Download-Manager schickt, um seinen wahren Standort, z. B. ein unzulässiges Land, zu verheimlichen.

Als weitere Sicherheit wird vorgeschlagen, dass die Session-IDs nur eine vordefinierte Gültigkeitsdauer, z. B. maximal 5 Minuten, haben, die der Download-Manager beim Empfang des Antwort-Telegramms vom SAT-Dongle kontrolliert. Nur wenn innerhalb der zuvor definierten Gültigkeitsdauer ein Antwort-Telegramm des SAT-Dongles den Download-Manager erreicht, würde der Download-Manager den Download der Software gestatten. Dadurch könnte verhindert werden, dass ein vom SAT-Dongle verschicktes Antwort-Telegramm abgefangen und in aller Ruhe entschlüsselt wird, um beispielsweise eine Verfälschung der geografischen Koordinaten vornehmen zu können.

Eine derartige Gültigkeitsdauer muss nicht zwingend an den Session-IDs festgemacht werden, dazu reicht es im Prinzip auch aus, dass sich der Download-Manager den Zeitstempel des Sendezeitpunktes des Anfrage-Telegramms an den SAT-Dongle merkt, und eine Gültigkeitsdauer-Bestimmung anhand der zeitlichen Differenz zwischen dem Empfangszeitpunkt des Antwort-Telegramms und dem Sendezeitpunkt es Anfrage-Telegramms vornimmt.

Ein mit kriminellen Absichten vorgenommenes "Sharen" der Schnittstelle, z. B. des USB-Ports, an dem der SATDongle betrieben wird über das Internet/Intranet, kann ggf. dazu führen, dass es jemanden gelingen könnte, die geografischen Koordinaten von einem SAT-Dongle der in einem zulässigen Land betrieben wird in einem unzulässigen Land zu verwenden, um den Download der Software unberechtigter Weise doch zu erwirken. Als zusätzliche Sicherheit gegen aus kriminellen Absichten vorgenommenes "Sharen" der Schnittstelle über das Internet/Intranet, wird vorgeschlagen, dass die Antwortzeiten des SAT-Dongles, z. B. die von Pings, von Kommunikations-Protokollen sowie die Ethernet-Latenzzeiten, vom Download-Manager ausgewertet und überwacht werden. Ein Überschreiten der Antwortzeiten einer zuvor festzulegenden Maximal-Antwortzeit, z. B. 500 Mikrosekunden, kann im Download-Manager kontrolliert werden. Das, z. B. mehrfache, Detektieren des Überschreitens der Maximal-Antwortzeit kann dann im Download-Manager aufgrund des Verdachts auf eine "gesharte" Schnittstelle, z. B. "geshareter" USB-Port, dazu verwendet werden, den Download der Software abzubrechen bzw. diesen zu verhindern.

In einer weiteren vorteilhaften Ausgestaltung des Verfahrens können sowohl das Anfrage-Telegramm wie auch das Antwort-Telegramm zusätzlich mit einem CRC-Code über alle Daten der Telegramme behaftet werden, wodurch eventuelle Datenverfälschungen auf der jeweiligen Telegramm-Empfängerseite erkannt werden können.

Es kann auch der Bezahlungs-Aspekt für eine ggf. kostenpflichtige Software/Lizenz-Software berücksichtigt werden. Der Nutzer entscheidet sich für den Download und Erwerb einer kostenpflichtigen Software auf der Internetseite eines Herstellers/Distributors. Daraufhin wird (1) geprüft, ob die Software an den aktuellen Aufenthaltsort des Nutzers überhaupt heruntergeladen werden darf und erst danach (2) würde der Bezahlungsvorgang z. B. per Kreditkarte wie üblich online abgewickelt werden. Erst nach einem erfolgreich abgewickelten Bezahlungsvorgang käme es dann tatsächlich (3) zum Download der Software.

Auführungsformen der Erfindung können auch dazu genutzt werden, die Ausführung des ausführbaren Computerprogramms, das auch als Software bezeichnet werden kann, zu kontrollieren. Nachfolgend wird beschrieben, wie überprüft werden kann, dass die Software nur an Orten ausgeführt wird, an denen eine Ausführung zulässig ist.

Der Nutzer startet die zu betreibende Software, z. B. durch Doppelklick auf die Execute-Datei, *.exe, woraufhin noch bevor die Software startet ein Überwachungs-Modul in der zu betreibenden Software (1) aktiviert wird, das sich um die sichere Kommunikation der Software mit dem SAT-Dongle kümmert. Das Überwachungs-Modul (2) liest mittels eines Initialisierungs-Telegramms die eindeutige SAT-Dongle-ID automatisch über die Kommunikations-Schnittstelle zum SAT-Dongle aus, z. B. über die USB-Schnittstelle. Nach dem erfolgreichen Auslesen der SAT-Dongle-ID (3) ermittelt das Überwachungs-Modul der Software durch ihm nutzerseitig zugängliche Listen und/oder Datenbanken den öffentlichen Schlüssel (public key) des spezifischen SAT-Dongles. Danach erzeugt das Überwachungs-Modul der Software (4) dynamisch einen Identifier, die sogenannte Session-ID. Diese Session-ID sollte eine mehrziffrige Zufallszahl sein, z. B. mindestens 30ig-stellig. Anschließend (5) verpackt das Überwachungs-Modul der Software diese Session-ID gemeinsam mit dem öffentlichen Schlüssel (dem "public key") der Software selbst in ein Anfrage-Telegramm. Danach (6) verschlüsselt das Überwachungs-Modul der Software dieses Anfrage-Telegramm mit dem öffentlichen Schlüssel (public key) des SAT-Dongles SAT-Dongle-spezifisch und (7) schickt dieses Anfrage-Telegramm an das gesteckte SATDongle.

Die Verschlüsselung des Anfrage-Telegramms kann deswegen SAT-Dongle-spezifisch erfolgen, weil das Überwachungs-Modul der Software zuvor die eindeutige SAT-Dongle-ID aus dem SAT-Dongle gelesen hat und damit über ihm zugängliche Listen den öffentlichen Schlüssel (public key) des SAT-Dongles nachschlagen kann. Die Verschlüsselung soll deswegen SAT-Dongle-spezifisch erfolgen, damit nur dieser eine SAT-Dongle das Anfrage-Telegramm entschlüsseln kann.

Zur Verschlüsselung des Anfrage-Telegramms kann beispielsweise das RSA-Verfahren hergenommen werden, bei dem das Anfrage-Telegramm vom Überwachungs-Modul der Software mit dem öffentlichen Schlüssel (public key) des spezifischen SAT-Dongles verschlüsselt werden könnte. Der SAT-Dongle kann dann das empfangene Anfrage-Telegramm mit seinem privaten Schlüssel (private key) als einziger wieder entschlüsseln. Das Nutzerseitig gesteckte SAT-Dongle (1) empfängt das verschlüsselte Anfrage-Telegramm, (2) entschlüsselt dieses mit z. B. seinem nur ihm bekannten privaten Schlüssel (private key) und (3) zerlegt dieses in seine Datenbestandteile. Das SAT-Dongle (4) ermittelt im nächsten Schritt die geografischen Koordinaten seines aktuellen Standortes über den Empfang von entsprechenden Satelliten-Signalen. Sowie die geografischen Standort-Koordinaten vollständig vorliegen (5) erzeugt das SAT-Dongle ein Antwort-Telegramm, bestehend aus (A) der vom Überwachungs-Modul der Software im Anfrage-Telegramm erhaltenen Session-ID sowie (B) den aktuellen geografischen Standort-Koordinaten, die immer den aktuellen Standort des SAT-Dongles repräsentieren. Das SAT-Dongle (6) verschlüsselt danach das Antwort-Telegramm mit dem öffentlichen Schlüssel (public key) des Überwachungs-Moduls Überwachungs-Modul-spezifisch und (7) schickt das Antwort-Telegramm an das Überwachungs-Modul der Software. Das Überwachungs-Modul der Software (1) entschlüsselt daraufhin das Antwort-Telegramm des SAT-Dongles mit seinem ihm bekannten privaten Schlüssel (private key) und (2) zerlegt dieses in seine Dateninhalte. Das Überwachungs-Modul (3) prüft als erstes die von ich im Anfrage-Telegramm verschickte Session-ID mit der vom SAT-Dongle zurückgeschickten auf Gleichheit. Nur wenn beide Session-IDs identisch sind, (4) wertet das Überwachungs-Modul die geografischen Koordinaten aus und (5) prüft über dem Überwachungs-Modul zugängliche Listen und/oder Datenbanken, ob es sich um einen zulässigen geografischen Standort/eine zulässige Region handelt, an dem sich sowohl der SAT-Dongle als auch die Software befindet. Die Software startet nur dann, wenn die Prüfung der geografischen Koordinaten einen zulässigen Ort ergeben hat, andernfalls würde das Überwachungs-Modul ein Starten der Software verhindern oder ggf. den Betrieb der Software nur in einem eingeschränkten Modus zulassen.

Es wird erfindungsgemäß vorgeschlagen, dass die regionenspezifische Information die Angaben darüber machen, in welchem Land, in welcher Region die jeweilige Software betrieben werden darf, hardcodiert in dieser Software selbst hinterlegt ist, z. B. in Form einer geografischen Koordinaten Positiv-oder Negativ- Liste bzw. Datenbank.

Die Verschlüsselung des Antwort-Telegramms kann deswegen durch den SAT-Dongle Software-spezifisch erfolgen, weil dem SAT-Dongle der öffentlichen Schlüssel (public key) des Überwachungs-Moduls der Software im Anfrage-Telegramm übermittelt wurde. Die Verschlüsselung soll deswegen Software-spezifisch erfolgen, damit nur dieses Überwachungs-Modul das Antwort-Teegramm entschlüsseln kann.

Zur Verschlüsselung des Antwort-Telegramms kann beispielsweise ebenfalls das RSA-Verfahren hergenommen werden, bei dem das Antwort-Telegramm vom SAT-Dongle mit dem öffentlichen Schlüssel (public key) der spezifischen Software verschlüsselt wird. Das Überwachungs-Modul der Software kann dann das empfangene Antwort-Telegramm mit ihrem privaten Schlüssel (private key) als einziger wieder entschlüsseln.

Durch die Prüfung des Überwachungs-Moduls der Software der von ihm im Anfrage-Telegramm verschickten Session-ID mit der vom SAT-Dongle zurückgeschickten Session-ID auf Übereinstimmung kann verhindert werden, dass jemand ein Antwort-Telegramm in einem zulässigen Land aufzeichnet, dieses gegen das vom SAT-Dongle erzeugte Antwort-Telegramm austauscht und dieses dann anstelle des echten Antwort-Telegramms an das Überwachungs-Modul der Software schickt, um seinen wahren Standort, z. B. ein unzulässiges Land, zu verheimlichen.

Es ist im übrigen technisch möglich, dass die in der Software hinterlegte geografische Koordinaten Positiv- oder Negativ-Liste/Datenbank mit einem Update der Software , z. B. Hotfix, ServicePack, dynamisierbar/austauschbar ist, dass heißt an die neuesten Gegebenheiten angepasst werden kann. Wenn also beispielsweise ab einem gewissen Zeitpunkt weitere Länder als unzulässig für den Betrieb einer Software definiert werden, kann über den Standard-Mechanismus "Software-Update" auch die Positiv- oder Negativ- Liste/Datenbank mit angepasst werden und ein Betrieb der Software daraufhin geändert oder verhindert werden.

Die Software startet sich nach dem Abgleich der geografischen Koordinaten erfindungsgemäß nur dann, wenn die Prüfung ergeben hat, dass der Betriebs-Ort zulässig ist. In allen anderen Fällen wird z. B. der Startvorgang der Software abgebrochen oder sollte die Software bereits laufen, würde diese nach Rückmeldung ggf. beendet werden.

Es wird darüber hinaus auch beansprucht, dass die hier beschrieben geografische Koordinaten-Prüfung zyklisch während des Betriebs der Software erfolgen können soll, z.B. regelmä-βig alle 30 Minuten. Dadurch kann zusätzlich gewährleistet werden, dass jemand seine Software startet, sich in ein Flugzeug setzt und die Software dann doch an einem unzulässigen Ort betreiben kann.

Die hier beschriebenen Verfahren sollen zur standortabhängigen Betriebs-Überwachung sowohl einer einzelnen Software/Software-Lizenz als auch mehrerer Softwaren/Software-Lizenzen verwendet werden können, wobei auch die Betriebs-Überwachung mehrerer Softwaren/Software-Lizenzen mit nur einem einzigen SAT-Dongle beansprucht werden soll.

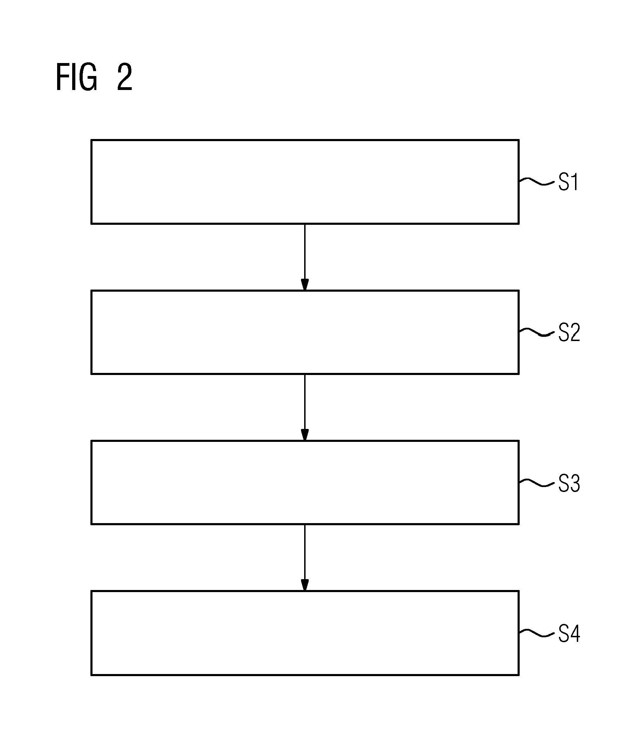

Figur 2 ist ein Flussdiagramm eines Verfahrens nach Ausführungsformen der Erfindung. Zunächst werden Signale in Schritt S1 durch den Empfänger von einem Satelliten-Navigationssystem empfangen. Der Empfänger bestimmt in Schritt S2 Ortsdaten aus den empfangenen Signalen und verschlüsselt die Ortsdaten in Schritt S3. In Schritt S4 werden die verschlüsselten Ortsdaten an das Verarbeitungsgerät durch den Empfänger übertragen.

Die verschlüsselt übertragenen Ortsdaten können dann durch das Verarbeitungsgerät dazu verwendet werden, die Übertragung von Daten an ein Nutzergerät zu überprüfen. Die Daten werden dann nur an das Nutzergerät übertragen, wenn die Überprüfung ergeben hat, dass an dem Ort des Empfängers, der mit dem Ort des Nutzergerätes übereinstimmt, die Daten empfangen werden dürfen.

Alternativ oder zusätzlich dazu, können die Ortsdaten durch das Verarbeitungsgerät dazu verwendet werden, um zu kontrollieren, ob ein ausführbares Computerprogramm an dem Ort des Verarbeitungsgerätes ausgeführt werden darf. In diesem Falle stimmt der Ort des Empfängers mit dem Ort des Verarbeitungsgerätes überein. Beispielsweise werden die Ortsdaten mit Ortsdaten in einer gespeicherten Datenbank verglichen. Die Datenbank umfasst außerdem Informationen, ob an den jeweils gespeicherten Ortsdaten eine Ausführung des Computerprogramms zulässig ist.

## Patentansprüche

1. Verfahren zur Übertragung von Ortsdaten eines Satelliten-navigationssystems (106) von einem Empfänger (100) für Signale des Satellitennavigationssystems an ein Verarbeitungsgerät (102; 104), wobei das Verfahren die folgenden Schritte umfasst
- Empfang (S1) von Signalen des Satellitennavigationssystems durch den Empfänger (100);
- Bestimmung (S2) von Ortsdaten aus den empfangenen Signalen durch den Empfänger (100);
- Verschlüsselung (S3) der Ortsdaten durch den Empfänger (100); und
- Übertragung (S4) der verschlüsselten Ortsdaten an das Verarbeitungsgerät (102; 104) durch den Empfänger (100).

2. Verfahren nach Anspruch 1, wobei das Verfahren die folgenden Schritte umfasst:
- Aufbau einer ersten Verbindung zwischen einem Nutzergerät (102) und dem Empfänger (100) und Aufbau einer zweiten Verbindung zwischen dem Nutzergerät (102) und dem Verarbeitungsgerät (104), wobei die verschlüsselten Ortsdaten über die erste und die zweite Verbindung übertragen werden, und wobei die Ortsdaten einen Ort des Nutzergeräts (102) und des Empfängers (100) spezifizieren;
- Anfrage nach einer Übertragung von Daten über die zweite Verbindung durch das Nutzergerät (102);
- Entschlüsselung der verschlüsselten Ortsdaten durch das Verarbeitungsgerät (104);
- Überprüfung, ob die Daten an den Ort des Nutzergeräts (102) übertragen werden dürfen;
- Übertragung der Daten an das Nutzergerät (102) durch das Verarbeitungsgerät (104), wenn die Überprüfung ergeben hat, dass die Daten übertragen werden dürfen.

3. Verfahren nach Anspruch 2, wobei das Verfahren die folgenden Schritte umfasst:
- Übertragung einer Adresse des Nutzergeräts (102) über die erste Verbindung an den Empfänger (100);
- Verschlüsselung der Adresse durch den Empfänger (100);
- Übertragung der verschlüsselten Adresse über die erste und die zweite Verbindung an das Verarbeitungsgerät (104), wobei das Verarbeitungsgerät (104) die Adresse verwendet, um Daten an das Nutzergerät (102) zu übertragen.

4. Verfahren nach einem der Ansprüche 2 oder 3, wobei das Verfahren die folgenden Schritte umfasst:
- Übertragung eines Identifikators des Empfängers (100) vom Empfänger (100) an das Verarbeitungsgerät (104);
- Ermittlung eines öffentlichen Schlüssels des Empfängers (100) durch das Verarbeitungsgerät (104) unter Verwendung des Identifikators;
- Erzeugung einer Session-ID durch das Verarbeitungsgerät (104);
- Verschlüsselung der Session-ID mit dem öffentlichen Schlüssel des Empfängers (100) durch das Verarbeitungsgerät (104);
- Übertragung der verschlüsselten Session-ID von dem Verarbeitungsgerät (104) an den Empfänger (100);
- Entschlüsselung der Session-ID durch den Empfänger (100);
- Übertragung der Session-ID vom Empfänger (100) an das Verarbeitungsgerät (104) zusammen mit den Ortsdaten und der Adresse des Nutzergeräts (102); und daraufhin
- Überprüfung, ob die vom Empfänger (100) empfangene Session-ID mit der zuvor an den Empfänger (100) übertragenen Session-ID übereinstimmt durch das Verarbeitungsgerät (104), wobei die Daten nur dann an das Nutzergerät (102) übertragen werden, wenn die vom Empfänger (100) empfangene Session-ID mit der zuvor an den Empfänger (100) übertragenen Session-ID übereinstimmt.

5. Verfahren nach Anspruch 4, wobei ein öffentlicher Schlüssel des Verarbeitungsgeräts (104) mit dem öffentlichen Schlüssel des Empfängers (100) verschlüsselt wird, wobei der verschlüsselte öffentliche Schlüssel des Verarbeitungsgeräts (104) an den Empfänger (100) übertragen wird, und wobei der öffentliche Schlüssel des Verarbeitungsgeräts (104) durch den Empfänger (100) unter Verwendung des privaten Schlüssels des Empfängers (100) entschlüsselt wird, und wobei der öffentliche Schlüssel des Verarbeitungsgeräts (104) zur Verschlüsselung der Session-ID, der Ortsdaten und/oder der Adresse des Nutzergeräts (102) verwendet wird.

6. Verfahren nach einem der Ansprüche 4 oder 5, wobei die Session-ID eine Gültigkeitsdauer aufweist, wobei die Session-ID nach Ablauf der Gültigkeitsdauer ungültig wird, und wobei die Gültigkeit der Session-ID durch das Verarbeitungsgerät (104) geprüft wird, wenn die Session-ID von dem Empfänger (100) empfangen wird, wobei die Daten nur dann an das Nutzergerät (102) übertragen werden, wenn die Session-ID gültig ist.

7. Verfahren nach einem der Ansprüche 2-6, wobei das Verarbeitungsgerät (104) eine Antwortzeit des Empfängers (100) auf eine Anfrage mit einem Maximalwert vergleicht, wobei die Daten nur dann an das Nutzergerät (102) übertragen werden, wenn die Antwortzeit unterhalb des Maximalwerts liegt oder wenn die Antwortzeit gleich dem Maximalwert ist.

8. Verfahren nach einem der Ansprüche 2-7, wobei die Daten Daten eines ausführbaren Computerprogramms sind.

9. Verfahren nach einem der vorhergehenden Ansprüche, wobei das Verfahren die folgenden Schritte umfasst:
- Empfang einer Anfrage zur Ausführung eines Computerprogrammes;
- Entschlüsselung der verschlüsselten Ortsdaten durch das Verarbeitungsgerät (102);
- Überprüfung, ob das Computerprogramm an einem durch die Ortsdaten spezifizierten Ort ausgeführt werden darf;
- Ausführung des Computerprogramms, wenn es an dem Ort ausgeführt werden darf.

10. Verfahren nach Anspruch 9, wobei das Verfahren die folgenden Schritte umfasst:
- Auslesen eines Identifikators des Empfängers (100) durch das Verarbeitungsgerät (102);
- Ermittlung eines öffentlichen Schlüssels des Empfängers (100) unter Verwendung des Identifikators;
- Erzeugung einer Session-ID durch das Verarbeitungsgerät (102);
- Verschlüsselung der Session-ID und eines öffentlichen Schlüssels des Verarbeitungsgeräts (102) mit dem öffentlichen Schlüssel des Empfängers (100);
- Übertragung der verschlüsselten Session-ID und des verschlüsselten öffentlichen Schlüssels des Verarbeitungsgeräts (102) an den Empfänger (100);
- Entschlüsselung der verschlüsselten Session-ID und des verschlüsselten öffentlichen Schlüssels des Verarbeitungsgeräts (102) durch den Empfänger (100) unter Verwendung eines privaten Schlüssels des Empfängers (100), wobei der öffentliche Schlüssel des Verarbeitungsgeräts (102) zur Verschlüsselung der Ortsdaten verwendet wird;
- Verschlüsselung der Session-ID mit dem öffentlichen Schlüssel des Verarbeitungsgeräts (102);
- Übertragung der verschlüsselten Session-ID von dem Empfänger (100) an das Verarbeitungsgerät (102);
- Entschlüsselung der verschlüsselten Session-ID durch das Verarbeitungsgerät (102);
- Überprüfung, ob die von dem Empfänger (100) an das Verarbeitungsgerät (102) übertragene Session-ID mit der vom Verarbeitungsgerät (102) an den Empfägner übertragenen Session-ID übereinstimmt;
- Ausführung des Computerprogramms, nur wenn die von dem Empfänger (100) an das Verarbeitungsgerät (102) übertragene Session-ID mit der vom Verarbeitungsgerät (102) an den Empfänger (100) übertragenen Session-ID übereinstimmt.

11. Verfahren nach Anspruch 9 oder 10, wobei zusätzliche Überprüfungen, ob das Computerprogramm an dem Ort ausgeführt werden darf, in regelmäßigen Abständen während der Ausführung des Computerprogramms erfolgen.

12. Empfänger (100) für Signale eines Satellitennavigationssystems mit:
- Mitteln zum Empfang von Signalen des Satellitennavigationssystems;
- Mitteln zur Bestimmung von Ortsdaten aus den empfangenen Signalen;
- Mitteln zur Verschlüsselung der Ortsdaten; und
- Mitteln zur Übertragung der verschlüsselten Ortsdaten an ein Verarbeitungsgerät (102) durch den Empfänger (100).

13. Computerprogrammprodukt mit durch einen Prozessor ausführbaren Instruktionen, wobei die Instruktionen bei Ausführung einen Empfänger (100) und ein Verarbeitungsgerät (102; 104) zur Durchführung eines Verfahrens nach einem der Ansprüche 1-11 veranlassen.

14. System aus einem Empfänger (100) und einem Verarbeitungsgerät (102; 104), wobei der Empfänger (100) und das Verarbeitungsgerät zur Durchführung eines Verfahrens nach einem der Ansprüche 1-11 ausgebildet sind.

## Geänderte Patentansprüche

### Geänderte Patentansprüche gemäss Regel 137(2) EPÜ.

**1.** Verfahren zur Übertragung von Ortsdaten eines Satellitennavigationssystems (106) von einem Empfänger (100) für Signale des Satellitennavigationssystems an ein Verarbeitungsgerät (102; 104), wobei das Verfahren die folgenden Schritte umfasst
- Aufbau einer ersten Verbindung zwischen einem Nutzergerät (102) und dem Empfänger (100) und Aufbau einer zweiten Verbindung zwischen dem Nutzergerät (102) und dem Verarbeitungsgerät (104);
- Anfrage nach einer Übertragung von Daten über die zweite Verbindung durch das Nutzergerät (102);
- Übertragung eines Identifikators des Empfängers (100) vom Empfänger (100) an das Verarbeitungsgerät (104);
- Ermittlung eines öffentlichen Schlüssels des Empfängers (100) durch das Verarbeitungsgerät (104) unter Verwendung des Identifikators;
- Erzeugung einer Session-ID durch das Verarbeitungsgerät (104);
- Verschlüsselung der Session-ID mit dem öffentlichen Schlüssel des Empfängers (100) durch das Verarbeitungsgerät (104);
- Übertragung der verschlüsselten Session-ID von dem Verarbeitungsgerät (104) an den Empfänger (100);
- Entschlüsselung der Session-ID durch den Empfänger (100);
- Empfang (S1) von Signalen des Satellitennavigationssystems durch den Empfänger (100);
- Bestimmung (S2) von Ortsdaten aus den empfangenen Signalen durch den Empfänger (100);
- Verschlüsselung (S3) der Ortsdaten durch den Empfänger (100); und
- Übertragung (S4) der verschlüsselten Ortsdaten an das Verarbeitungsgerät (102; 104) durch den Empfänger (100), wobei die verschlüsselten Ortsdaten über die erste und die zweite Verbindung übertragen werden, und wobei die Ortsdaten einen Ort des Nutzergeräts (102) und des Empfängers (100) spezifizieren;
- Übertragung der Session-ID vom Empfänger (100) an das Verarbeitungsgerät (104) zusammen mit den Ortsdaten und der Adresse des Nutzergeräts (102); und daraufhin
- Überprüfung, ob die vom Empfänger (100) empfangene Session-ID mit der zuvor an den Empfänger (100) übertragenen Session-ID übereinstimmt durch das Verarbeitungsgerät (104);
- Entschlüsselung der verschlüsselten Ortsdaten durch das Verarbeitungsgerät (104);
- Überprüfung, ob die Daten an den Ort des Nutzergeräts (102) übertragen werden dürfen;
- Übertragung der Daten an das Nutzergerät (102) durch das Verarbeitungsgerät (104), wenn die Überprüfung ergeben hat, dass die Daten übertragen werden dürfen, wobei die Daten nur dann an das Nutzergerät (102) übertragen werden, wenn die vom Empfänger (100) empfangene Session-ID mit der zuvor an den Empfänger (100) übertragenen Session-ID übereinstimmt.

**2.** Verfahren nach Anspruch 1, wobei das Verfahren die folgenden Schritte umfasst:
- Übertragung einer Adresse des Nutzergeräts (102) über die erste Verbindung an den Empfänger (100);
- Verschlüsselung der Adresse durch den Empfänger (100);
- Übertragung der verschlüsselten Adresse über die erste und die zweite Verbindung an das Verarbeitungsgerät (104), wobei das Verarbeitungsgerät (104) die Adresse verwendet, um Daten an das Nutzergerät (102) zu übertragen.

**3.** Verfahren nach Anspruch 1, wobei ein öffentlicher Schlüssel des Verarbeitungsgeräts (104) mit dem öffentlichen Schlüssel des Empfängers (100) verschlüsselt wird, wobei der verschlüsselte öffentliche Schlüssel des Verarbeitungsgeräts (104) an den Empfänger (100) übertragen wird, und wobei der öffentliche Schlüssel des Verarbeitungsgeräts (104) durch den Empfänger (100) unter Verwendung des privaten Schlüssels des Empfängers (100) entschlüsselt wird, und wobei der öffentliche Schlüssel des Verarbeitungsgeräts (104) zur Verschlüsselung der Session-ID, der Ortsdaten und/oder der Adresse des Nutzergeräts (102) verwendet wird.

**4.** Verfahren nach einem der Ansprüche 1 oder 3, wobei die Session-ID eine Gültigkeitsdauer aufweist, wobei die Session-ID nach Ablauf der Gültigkeitsdauer ungültig wird, und wobei die Gültigkeit der Session-ID durch das Verarbeitungsgerät (104) geprüft wird, wenn die Session-ID von dem Empfänger (100) empfangen wird, wobei die Daten nur dann an das Nutzergerät (102) übertragen werden, wenn die Session-ID gültig ist.

**5.** Verfahren nach einem der Ansprüche 1 bis 4, wobei das Verarbeitungsgerät (104) eine Antwortzeit des Empfängers (100) auf eine Anfrage mit einem Maximalwert vergleicht, wobei die Daten nur dann an das Nutzergerät (102) übertragen werden, wenn die Antwortzeit unterhalb des Maximalwerts liegt oder wenn die Antwortzeit gleich dem Maximalwert ist.

**6.** Verfahren nach einem der Ansprüche 1 bis 5, wobei die Daten eines ausführbaren Computerprogramms sind.

**7.** Verfahren nach einem der vorhergehenden Ansprüche, wobei das Verfahren die folgenden Schritte umfasst:
- Empfang einer Anfrage zur Ausführung eines Computerprogrammes ;
- Entschlüsselung der verschlüsselten Ortsdaten durch das Verarbeitungsgerät (102);
- Überprüfung, ob das Computerprogramm an einem durch die Ortsdaten spezifizierten Ort ausgeführt werden darf;
- Ausführung des Computerprogramms, wenn es an dem Ort ausgeführt werden darf.

**8.** Verfahren nach Anspruch 7, wobei das Verfahren die folgenden Schritte umfasst:
- Auslesen eines Identifikators des Empfängers (100) durch das Verarbeitungsgerät (102);
- Ermittlung eines öffentlichen Schlüssels des Empfängers (100) unter Verwendung des Identifikators;
- Erzeugung einer Session-ID durch das Verarbeitungsgerät (102);
- Verschlüsselung der Session-ID und eines öffentlichen Schlüssels des Verarbeitungsgeräts (102) mit dem öffentlichen Schlüssel des Empfängers (100);
- Übertragung der verschlüsselten Session-ID und des verschlüsselten öffentlichen Schlüssels des Verarbeitungsgeräts (102) an den Empfänger (100);
- Entschlüsselung der verschlüsselten Session-ID und des verschlüsselten öffentlichen Schlüssels des Verarbeitungsgeräts (102) durch den Empfänger (100) unter Verwendung eines privaten Schlüssels des Empfängers (100), wobei der öffentliche Schlüssel des Verarbeitungsgeräts (102) zur Verschlüsselung der Ortsdaten verwendet wird;
- Verschlüsselung der Session-ID mit dem öffentlichen Schlüssel des Verarbeitungsgeräts (102);
- Übertragung der verschlüsselten Session-ID von dem Empfänger (100) an das Verarbeitungsgerät (102);
- Entschlüsselung der verschlüsselten Session-ID durch das Verarbeitungsgerät (102);
- Überprüfung, ob die von dem Empfänger (100) an das Verarbeitungsgerät (102) übertragene Session-ID mit der vom Verarbeitungsgerät (102) an den Empfänger übertragenen Session-ID übereinstimmt;
- Ausführung des Computerprogramms, nur wenn die von dem Empfänger (100) an das Verarbeitungsgerät (102) übertragene Session-ID mit der vom Verarbeitungsgerät (102) an den Empfänger (100) übertragenen Session-ID übereinstimmt.

**9.** Verfahren nach Anspruch 7 oder 8, wobei zusätzliche Überprüfungen, ob das Computerprogramm an dem Ort ausgeführt werden darf, in regelmäßigen Abständen während der Ausführung des Computerprogramms erfolgen.

**10.** Empfänger (100) für Signale eines Satellitennavigationssystems mit:
- Mitteln zum Aufbau einer ersten Verbindung zwischen einem Nutzergerät (102) und dem Empfänger (100) und Aufbau einer zweiten Verbindung zwischen dem Nutzergerät (102) und dem Verarbeitungsgerät (104);
- Mitteln zur Anfrage nach einer Übertragung von Daten über die zweite Verbindung durch das Nutzergerät (102);
- Mitteln zur Übertragung eines Identifikators des Empfängers (100) vom Empfänger (100) an das Verarbeitungsgerät (104);
- Mitteln zur Ermittlung eines öffentlichen Schlüssels des Empfängers (100) durch das Verarbeitungsgerät (104) unter Verwendung des Identifikators;
- Mitteln zur Erzeugung einer Session-ID durch das Verarbeitungsgerät (104);
- Mitteln zur Verschlüsselung der Session-ID mit dem öffentlichen Schlüssel des Empfängers (100) durch das Verarbeitungsgerät (104);
- Mitteln zur Übertragung der verschlüsselten Session-ID von dem Verarbeitungsgerät (104) an den Empfänger (100);
- Mitteln zur Entschlüsselung der Session-ID durch den Empfänger (100);
- Mitteln zum Empfang von Signalen des Satellitennavigationssystems;
- Mitteln zur Bestimmung von Ortsdaten aus den empfangenen Signalen;
- Mitteln zur Verschlüsselung der Ortsdaten; und
- Mitteln zur Übertragung der verschlüsselten Ortsdaten an ein Verarbeitungsgerät (102) durch den Empfänger (100), wobei die verschlüsselten Ortsdaten über die erste und die zweite Verbindung übertragen werden, und wobei die Ortsdaten einen Ort des Nutzergeräts (102) und des Empfängers (100) spezifizieren;
- Übertragung der Session-ID vom Empfänger (100) an das Verarbeitungsgerät (104) zusammen mit den Ortsdaten und der Adresse des Nutzergeräts (102); und daraufhin
- Überprüfung, ob die vom Empfänger (100) empfangene Session-ID mit der zuvor an den Empfänger (100) übertragenen Session-ID übereinstimmt durch das Verarbeitungsgerät (104);
- Entschlüsselung der verschlüsselten Ortsdaten durch das Verarbeitungsgerät (104);
- Überprüfung, ob die Daten an den Ort des Nutzergeräts (102) übertragen werden dürfen;
- Übertragung der Daten an das Nutzergerät (102) durch das Verarbeitungsgerät (104), wenn die Überprüfung ergeben hat, dass die Daten übertragen werden dürfen, wobei die Daten nur dann an das Nutzergerät (102) übertragen werden, wenn die vom Empfänger (100) empfangene Session-ID mit der zuvor an den Empfänger (100) übertragenen Session-ID übereinstimmt.

**11.** Computerprogrammprodukt mit durch einen Prozessor ausführbaren Instruktionen, wobei die Instruktionen bei Ausführung einen Empfänger (100) und ein Verarbeitungsgerät (102; 104) zur Durchführung eines Verfahrens nach einem der Ansprüche 1 bis 9 veranlassen.

**12.** System aus einem Empfänger (100) und einem Verarbeitungsgerät (102; 104), wobei der Empfänger (100) und das Verarbeitungsgerät zur Durchführung eines Verfahrens nach einem der Ansprüche 1 bis 9 ausgebildet sind.
